Europäisches Patentamt

(19) European Patent Office

Office européen des brevets

(11) Publication number: 0 061 548
A1

# (12) EUROPEAN PATENT APPLICATION

(21) Application number: 81301396.8

(22) Date of filing: 31.03.81

(51) Int. Cl.³: **B 01 J 8/42**
**B 01 J 8/32**
**//C10G35/14, C10G11/18,**
**C10G49/16**

(43) Date of publication of application:
06.10.82 Bulletin 82/40

(84) Designated Contracting States:
DE FR GB IT NL

(71) Applicant: Exxon Research and Engineering Company
P.O.Box 390 180 Park Avenue
Florham Park New Jersey 07932(US)

(72) Inventor: Mayer, Francis Xavier
5277 Whitehaven Street
Baton Rouge Louisiana(US)

(72) Inventor: Arey, William Floyd, Jr.
1324 Belvedere Drive
Baton Rouge Louisiana(US)

(74) Representative: Somers, Harold Arnold et al,
ESSO Engineering (Europe) Ltd. Patents & Licences
Apex Tower High Street
New Malden Surrey KT3 4DJ(GB)

(54) Hydrocarbon conversion process in a magnetically stabilized fluidized bed containing catalyst particles and heat carrier particles.

(57) Heat transfer in a hydrocarbon conversion process utilizing a magnetically stabilized fluid bed reactor (1) and a magnetically stabilized catalyst regenerator (2) is improved by the use of a fluidizable solids mixture comprising substantially inert heat carrier particles and catalyst particles wherein the inert particles have settling rates higher than the settling rates of the catalyst particles. Either the catalyst particles or the heat carrier particles or both are magnetizable. The heat carrier particles and the catalyst particles are completely or partially separated in settling zones (3) and (7) associated with the reactor and regenerator respectively. The separated heat carrier particles and catalyst particles are preferably independently circulated between the reactor and regenerator so that the heat carrier particles can be passed through one or more heat exchangers (4) and (8) to provide the desired temperature levels in the reactor and regenerator.

EP 0 061 548 A1

./...

# FIG. 2
SYSTEM-USING SEPARATE TRANSFER LINES

## HYDROCARBON CONVERSION PROCESS IN A MAGNETICALLY STABILIZED FLUIDIZED BED CONTAINING CATALYST PARTICLES AND HEAT CARRIER PARTICLES

The present invention relates to a hydrocarbon conversion process in a magnetically stabilized fluidized bed containing catalyst particles and heat carrier particles.

Many chemical and physical reactions such as catalytic cracking, hydrogenation, oxidation, reduction, drying, filtering, etc., are carried out in fluidized beds. A fluidized bed briefly consists of a mass of a particulate solid material in which the individual particles are in continuous motion relative to each other whereby the mass or fluidized bed possesses the characteristics of a liquid. Like a liquid, it will flow or pour freely, there is a hydrostatic head pressure, it seeks a constant level, it will permit the immersion of objects and will support relatively buoyant objects, and in many other properties it acts like a liquid. A fluidized bed is conventionally produced by effecting a flow of a fluid, usually gas, through a porous or perforate plate or membrane underlying the particulate mass, at a sufficient rate to support the individual particles in a relatively continuously moving manner. A minimum air flow or pressure drop is required to produce fluidization and is known as the incipient fluidization and is dependent on many parameters including particle size, particle density, etc. Any increase in the fluid flow beyond incipient fluidization causes an expansion of the fluidized bed to accommodate the increased fluid flow until the fluid velocity exceeds the free falling velocity of the particles which are then carried out of the apparatus.

Fluidized beds possess many desirable attributes, for example, in temperature control, heat transfer, catalytic reactions, and various chemical and physical reactions such as oxidation, reduction, drying, polymerization, coating, diffusion, filtering and the like. However, the establishment and maintenance of a stable fluidized bed by conventional procedures is a sensitive and difficult process possessing many drawbacks and disadvantages.

Among the problems associated with fluidized beds, a most basic one is that of bubble formation, frequently resulting in slugging, channeling, spouting and pneumatic transport; this problem is most common in gas-fluidized systems. The problem necessitates critical flow control and effects design factors such as minimum fluidization velocities, pressure drops, particle sizes, etc. Bubbling causes both chemical and mechanical difficulties for example, in gas-solids reactions gas bubbles may bypass the particles altogether resulting in lowered contacting efficiency.

Ideally, a fluidized bed should be free of bubbles, homogeneous, maintain particle suspension and manifest non-critical flow velocity control for various bed heights and bed densities. Many procedures and systems have been proposed to effect improvements, for example, by the use of baffles, gas distribution perforated plates, mechanical vibration and mixing devices, the use of mixed particle sizes, gas plus liquid flow schemes, special flow control valves, etc.

More recently, it has been disclosed in U.S. Patent Nos. 3,304,249; 3,440,731; and 3,439,899 that certain improvements in fluidized beds can be effected by applying a magnetic field to a fluidized bed of particulate solids having ferromagnetic properties.

In general, the use of a magnetically stabilized, fluidized bed minimizes solids back mixing and eliminates gas by-passing of the fluidized solids by preventing gas bubble formation. The elimination of back mixing in certain operations such as cat cracking, reforming, hydrofining, hydrocracking, drying, etc., is particularly advantageous since it prevents back mixing of feed and products and thereby results in a greater selectivity to desirable products. Unfortunately, the advantages associated with the elimination of back mixing are partially offset by the poorer heat transfer due to less violent agitation of the fluidized solid particles. Such a decrease in heat transfer could cause hot spots on the catalyst particles and leads to deactivation of the catalyst, side reactions, selectivity loss, etc. In addition, temperature control may be more difficult in certain reactions such as catalytic cracking, catalytic reforming, hydrocracking, hydrogenation, etc., which are highly exothermic or endothermic in nature.

The problems associated with the use of a magnetically stabilized, fluidized bed as regards heat transfer deficiencies are minimized or eliminated by the process of the present invention which utilizes a particulate solids mixture containing a plurality of separate, discrete (1) substantially inert heat carrier particles, and (2) magnetizable catalyst particles where the heat carrier particles are circulated independently of the catalyst particles to provide the desired temperature levels in the system.

The present invention provides a hydrocarbon conversion process which comprises the steps of:

    (a)    contacting a hydrocarbon feedstock at hydrocarbon conversion conditions in a conversion zone having a magnetic field applied thereto with a fluidized particulate solids mixture made up of a plurality of discrete substantially non-catalytic heat carrier particles and a plurality of discrete catalyst particles and whereof the heat carrier particles or the catalyst particles or both are magnetizable;

    (b)    at least partially separating heat carrier particles from catalyst particles;

    (c)    circulating catalyst particles and any associated heat carrier particles which have not been separated therefrom in step (b) to a regeneration zone;

    (d)    contacting the particles with oxygen in the regeneration zone at elevated temperatures to burn coke therefrom; and

(e)   circulating particles from the regeneration zone to the conversion zone.

Preferably, the catalyst particles and heat carrier particles have different settling rates in a fluidized bed, and the said at least partial separation of step (b) is performed by effecting selective settling of the heat carrier particles and catalyst particles.

The said at least partial separation of step (b) may be effected on the fluidized solids mixture either in the conversion zone or in a settling zone or a separation zone communicating with the conversion zone.

Preferably, the particles circulated to the regeneration zone in step (c) are transferred from a selected region of the conversion zone wherein the catalyst particles are associated with a substantially desired amount of inert particles.

Preferably the particles circulated to the regenerator in step (c) comprise a first stream which is transferred from a region of the conversion zone which is rich in catalyst particles, and preferably there is also transferred to the regenerator, independently of the first stream, a second stream from a settling zone communicating with the conversion zone, the second stream being rich in heat carrier particles.

Preferably, in step (e), particles circulate from a selected region of the regeneration zone wherein the catalyst particles are associated with a substantially desired amount of heat carrier particles.

Preferably, the particles circulated to the conversion zone in step (e) comprise a third stream which is transferred from a region of the regeneration zone which is rich in catalyst particles, and preferably, there is additionally circulated to the conversion zone a fourth stream, which is transferred independently of the third stream, from a region communicating with the regeneration zone which is rich in heat carrier particles.

Heat carrier particles which are at least partially separated in step (b) may circulate to a heat exchange zone for heat recovery from hot flue gas produced in the regeneration zone, and the heated heat carrier particles may thereafter be returned to the conversion zone.

Preferably, a magnetic field is imposed on the regeneration zone when magnetizable particles are intentionally circulated thereto.

Preferably, at least some of the particles circulating to the conversion zone pass through a heat exchange zone and/or at least some of the particles circulating to the regeneration zone pass through a heat exchange zone.

The invention provides, in another aspect, an apparatus suitable for use in the process described above, the apparatus comprising:

   (a)  a vessel for containing a bed of fluidized solids;

   (b)  means for applying a magnetic field to the bed;

   (c)  a bed disposed within the vessel and containing a particulate solids mixture of (i) magnetizable substantially non-catalytic particles, and (ii) non-magnetizable catalyst particles;

   (d)  means operable for fluidizing the bed; and

   (e)  means operable for at least partially separating said magnetizable substantially non-catalytic particles from said non-magnetizable catalytic particles.

The said apparatus may comprise means for exchanging heat with said separated magnetizable substantially non-catalytic particles.

0061548

In a further aspect, the invention provides a hydrocarbon conversion process which, in a first step, comprises (a) contacting a hydrocarbon feedstock in conversion, or reaction, zone having a magnetic field applied thereto with a fluidizable particulate solids mixture containing a plurality of separate discrete heat carrier particles and catalyst particles, said heat carrier particles having settling rates higher than the settling rates of said catalyst particles. In a first embodiment, a second step is one (b) permitting said heat carrier particles to settle in preference to the catalyst particles in a settling zone communicating with said conversion zone; (c) circulating said catalyst particles from the settling zone to a regeneration zone having a magnetic field applied thereto; (d) circulating said heat carrier particles from the settling zone to a heat exchanger means and thereafter to said regeneration zone, said circulation of heat carrier particles being independent of the circulation of catalyst particles; (e) contacting said catalyst particles in the presence of said heat carrier particles with oxygen at elevated temperatures to burn coke deposited upon said catalyst particles; (f) permitting said heat carrier ⸻⸻⸻⸻⸻.

particles to settle in preference to the catalyst particles in a settling zone communicating with said regeneration zone; (g) circulating said catalyst particles from the regeneration zone to a conversion zone having a magnetic field applied thereto; and (h) circulating said heat carrier particles from the settling zone to a heat exchanger means and thereafter to said conversion, or reaction zone, said circulation of heat carrier particles being independent of the circulation of catalyst particles.

The heat carrier particles employed in said first embodiment are substantially inert, and the other component comprising the particulate solids mixture are preferably magnetizable solids. By substantially inert is meant that the particles exert no catalytic influence on the chemical reaction occurring in the reaction zone. The heat carrier particles will include any known heat transfer materials such as alumina, mullite, porcelain, steel, etc. The heat carrier particles will preferably include ferromagnetic and ferrimagnetic substances including but not limited to magnetic $Fe_3O_4$, $\gamma$ - iron oxide ($Fe_2O_3$), ferrites of the form $MO.Fe_2O_3$, wherein M is a metal or mixture of metals such as Zn, Mn, Cu, etc.; ferromagnetic elements including iron, nickel, cobalt and gadolinium, alloys of ferromagnetic elements, etc.

The catalyst particles employed in said first embodiment are magnetizable, and will comprise one or more of the aforedescribed ferromagnetic and ferrimagnetic substances and a catalytic material chosen to effect the reaction desired. Accordingly, the magnetizable catalyst particles of the invention will include a vast number of conventional catalysts which are known to catalyze the desired reaction. Examples of catalysts useful herein include those catalysts conventionally employed in such processes as fluid catalytic cracking, reforming, hydrogenation, hydrocracking, isomerization, alkylation, polymerization, oxidation, etc.

A second embodiment also relates to a process wherein fluidizable catalyst solids are circulated between a fluidized bed reaction zone, and said particulate catalyst solids contacted with a hydrocarbon feedstock resulting in the deposition of coke on said catalyst solids and a fluidized bed regeneration zone in which the catalyst particles having coke deposited thereon are contacted with an oxygen-containing gas to remove said coke by combustion. Said second embodiment is an improvement which comprises (a) introducing into said reaction zone particulate solids having ferromagnetic properties so that said hydrocarbon feedstock is contacted with a particulate solids mixture containing a plurality of separate, discrete (1) magnetizable substantially non-catalytic particles, and (2) non-magnetizable catalytic particles; (b) applying a magnetic field to said reaction zone to form a magnetically stabilized fluid bed in said reaction zone; (c) withdrawing said particulate solids mixture from the reaction zone; (d) separating said magnetizable substantially non-catalytic particles from said non-magnetizable catalytic particles; and (e) returning said non-magnetizable catalytic solids to said regeneration zone. In order to compensate for heat effects in the reactor, the magnetizable substantially non-catalytic particles and the non-magnetizable catalytic particles can be circulated through the system at different rates. In addition, this embodiment contemplates the use of the heat exchanger to remove or add heat to the magnetizable non-catalytic particles.

In said second embodiment, the substantially non-catalytic particles which comprise the particulate solids mixture are magnetizable solids. By substantially non-catalytic is meant that the particles exert no catalytic influence on the chemical reaction occurring in the reaction zone. These substantially non-catalytic particles include ferromagnetic and ferrimagnetic substances including but not limited to magnetic $Fe_3O_4$, $\gamma$-iron oxide ($Fe_2O_3$), chromium dioxide, ferrites of the

form $MO.Fe_2O_3$, wherein M is a metal or mixture of metals such as Zn, Mn, Cu, etc.; ferromagnetic elements including iron, nickel, cobalt and gadolinium, alloys of ferromagnetic elements, etc. The larger the magnetization of the particle, the higher will be the transition velocity up to which the bed may be operated without bubbling, all other factors held constant. Preferably, the particle will have magnetization of at least 50 gauss, more preferably 250 gauss or greater.

The non-magnetizable catalytic particles will be chosen to effect the reaction desired. Accordingly, the non-magnetizable catalytic particles of the invention will include a vast number of conventional catalysts which are known to catalyze the desired reaction. Examples of catalysts useful herein include those catalysts conventionally employed in such processes as fluid catalytic cracking, reforming, hydrogenation, hydrocracking, isomerization, alkylation, polymerization, oxidation, etc.

The fluid catalytic cracking catalyst which may be used in the process of the invention include the highly active zeolite-containing catalysts and the amorphous silica-alumina catalysts.

In general, the zeolite-type catalysts are exemplified by those catalysts wherein a crystalline aluminosilicate is dispersed with a siliceous matrix. Among the well recognized types of zeolites useful herein are the "Type A", "Type Y", "Type X", "Type ZSM", mordenite, faujasite, erionite, and the like. A further description of these zeolites and their methods of preparation are given, for example, in U.S. Patents Nos. 2,882,243; 2,882,244; 3,130,007; 3,410,808; 3,733,390; 3,827,968 and patents mentioned therein, all incorporated herein by reference. Because of their extremely high activity, these zeolite materials are deposited with a material possessing a substantially lower level of catalytic activity such as a siliceous matrix material which may be of the synthetic, semi-synthetic or natural type. The matrix materials may include silica-alumina, silica-gel, silica-magnesia, alumina and clays such as montmorillonite, kaolin, etc.

The zeolite which is preferably incorporated into the matrix is usually exchanged with various cations to reduce the alkali metal oxide content thereof. In general, the alkali metal oxide content of the zeolite is reduced by ion exchange treatment with solutions of ammonium salt, or salts of metals in Groups II to VIII of the Periodic Table or the rare earth metals. Examples of suitable cations include hydrogen, ammonium, calcium, magnesium, zinc, nickel, molybdenum and the rare earths such as cerium, lanthanum, praseodymium, neodymium, and mixtures thereof. The catalyst will typically contain 2-25% of the zeolite component and 75-98% of the matrix component. The zeolite will usually be exchanged with sufficent cations to reduce the sodium level of the zeolite to less than 5 wt. %, preferably less than 1 wt. %. Other specific examples of these types of catalysts are found, for example, in U.S. Patent Nos.. 3,140,249; 3,140,251; 3,140,252 and 3,140,253, which are incorporated herein by reference.

When used in hydrotreating or hydrofining reactions the catalyst component will contain a suitable matrix component, such as those mentioned heretofore and one or more hydrogenating components comprising the transition metals, preferably selected from Groups VI and VIII of the Periodic Table. Examples of suitable hydrogenating metals which may be supported upon a suitable matrix include, among others, nickel, cobalt, molybdenum, tungsten, platinum, and palladium, ruthenium, rhenium, iridium (including the oxides and sulfides thereof). Mixtures of any two or more of such hydrogenating components may also be employed. For example, catalysts containing (1) nickel or cobalt, or the combination thereof, in the form of metal, oxide, sulfide, or any combination thereof and (2) molybdenum or tungsten, or the combination thereof, in the form of metal, oxide, sulfide or any combination thereof are known hydrofining catalysts. The total amount of hydrogenating component supported on the matrix may range from 2 to 25 wt.%, (calculated as metal) usually 5 to 20 wt.% based on the total weight of the catalyst composition. A typical hydrofining catalyst includes 3 to 8 wt.% CoO and/or NiO and about 8 to 20 wt.% $MoO_3$ and/or $WO_3$ (calculated as metal oxide).

Examples of reforming catalysts which may be used in accordance with the invention are those catalysts comprising a porous solid support and one or more metals (or compounds thereof, e.g. oxides) such as platinum, iridium, rhenium, palladium, etc. The support material can be a natural or a synthetically produced inorganic oxide or combination of inorganic oxides.

Typical acidic inorganic oxide supports which can be used are the naturally occurring aluminum silicates, particularly when acid treated to increase the activity, and the synthetically produced cracking supports, such as silica-alumina, silica-zirconia, silica-alumina-magnesia, and crystalline zeolitic aluminosilicates. Generally, however, reforming processes are preferably conducted in the presence of catalysts having low cracking activity, i.e., catalysts of limited acidity. Hence, preferred carriers are inorganic oxides such as magnesia and alumina. Other examples of suitable reforming catalysts are found in U.S. Patent Nos. 3,415,737; 3,496,096; 3,537,980; 3,487,009; 3,578,583; 3,507,780; and 3,617,520, which are incorporated herein by reference.

Preferably, the particles which are fluidized in the process of this invention will have a magnetization of at least 250 gauss, more preferably up to 3,000 gauss, and will range in particle size of from 0.001 mm to 50 mm, more preferably from 0.15 mm to 1.0 mm. Particle magnetization determines the stability of the bed and sets the operable velocity range for particles of a given particle size. Ferromagnetic content and applied field are used to control particle magnetization. Particle magnetization is difficult to predict precisely and magnetic measurements are generally made on particles of different sizes and ferromagnetic content. Curves of magnetization vs. applied field are obtained for design purposes. Particles of dimensions greater than 50 mm will be difficult, of course, to fluidize, while particles smaller than 0.001 mm will be difficult to contain in any fluidized process. In addition, the larger the magnetization of the particles, the higher will be the transition velocity up to which the fluidized bed may be operated without bubbling, all other factors held constant.

The magnetizable catalyst particles of the invention will contain 1 to 75, usually 5 to 50, wt.% (based on total weight of the particle) of the aforedescribed magnetic material and may be prepared by conventional techniques, such as by impregnating the aforedescribed zeolitic and/or inorganic oxide catalytic materials with a soluble precursor of a ferromagnetic substance which is subsequently reduced or oxidized to render the particles ferromagnetic. Alternatively, the ferromagnetic material may be incorporated into the catalyst component by encapsulation of finely divided ferromagnetic material.

The particulate solids mixture of the invention may comprise various amounts of the heat carrier particles and the magnetizable catalyst particles. In general, the particulate solids mixture will contain 1 to 15, preferably 1 to 10, volume % of the heat carrier particles and 85 to 99, preferably 90 to 99 volume % of the magnetizable catalyst particles.

The particulate solids mixture employing the magnetizable substantially non-catalytic particles and non-magnetizable catalytic particles contains from about 1 to 75, preferably 5 to 50 volume % of the magnetizable substantially non-catalytic particles and from substantially 25 to 99, preferably 50 to 95 % by volume of the non-magnetizable catalyst particles.

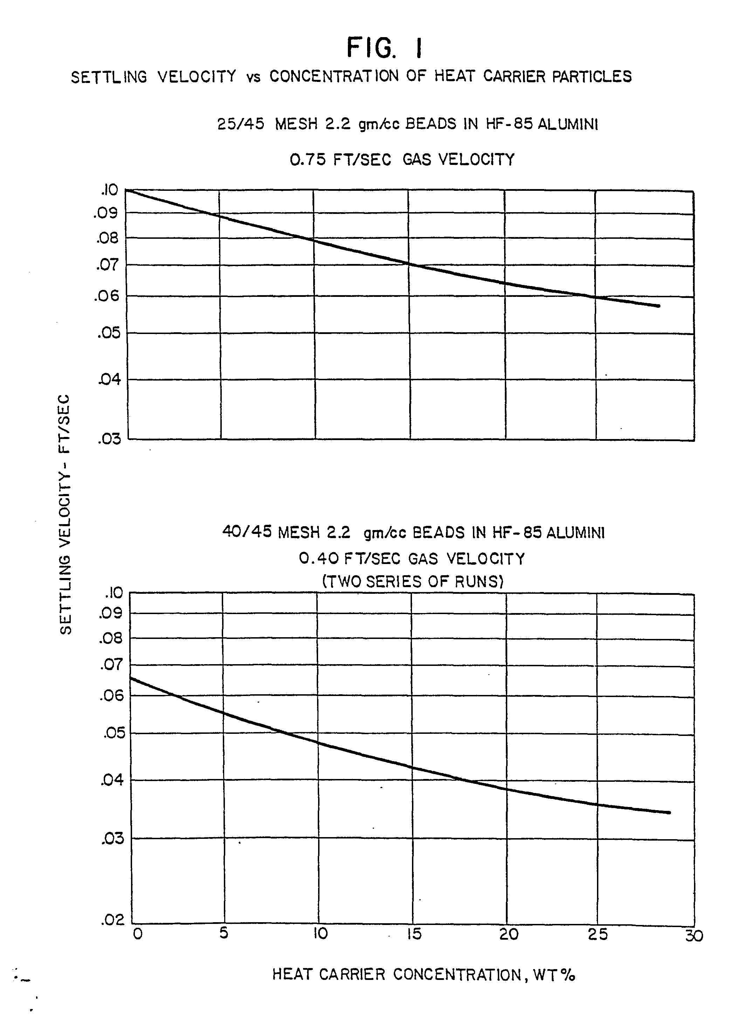

The size and density of the heat carrier particles and the catalyst particles are chosen so that the heat carrier particles may be separated from the catalyst particles by gravity settling in separation zones communicating with the reactor and regenerator zones. Accordingly, the heat carrier particles will have a significantly higher settling rate than the catalytic particles since the heat carrier particles will be heavier and/or larger than the catalyst particles. The relative density and size of the heat carrier and catalyst particles will be such that settling velocities of the inert heat carrier will range between 0.04 and .4 ft./sec. The settling rate for the heat carrier is a function of the heat carrier concentration and the effective viscosity of the catalyst bed. The settling rate can be determined experimentally for the particular reaction system employed. Data generally follow Stokes' law and can be estimated using the effective viscosity of the bed and particle size. Typical data on 2.2 gm/cc beads in an alumina-containing material are shown in Figure 1.

Heat carrier concentration also varies with bed height and can be determined using the following relationship:

$$c = \frac{W_b}{V} e^{-VY/D} + \frac{W_t}{V}$$

where: $c$ = heat carrier concentration, lbs./cu. ft.

$V$ = settling rate, ft./sec.

$W_t$ = rate heat carrier is fed in at the top, lbs./ (sec. x sq. ft.)

$W_b$ = rate heat carrier is picked up from the bottom, lbs./ (sec. x sq. ft.)

$D$ = diffusion coefficient of the bed, ft.$^2$/sec.

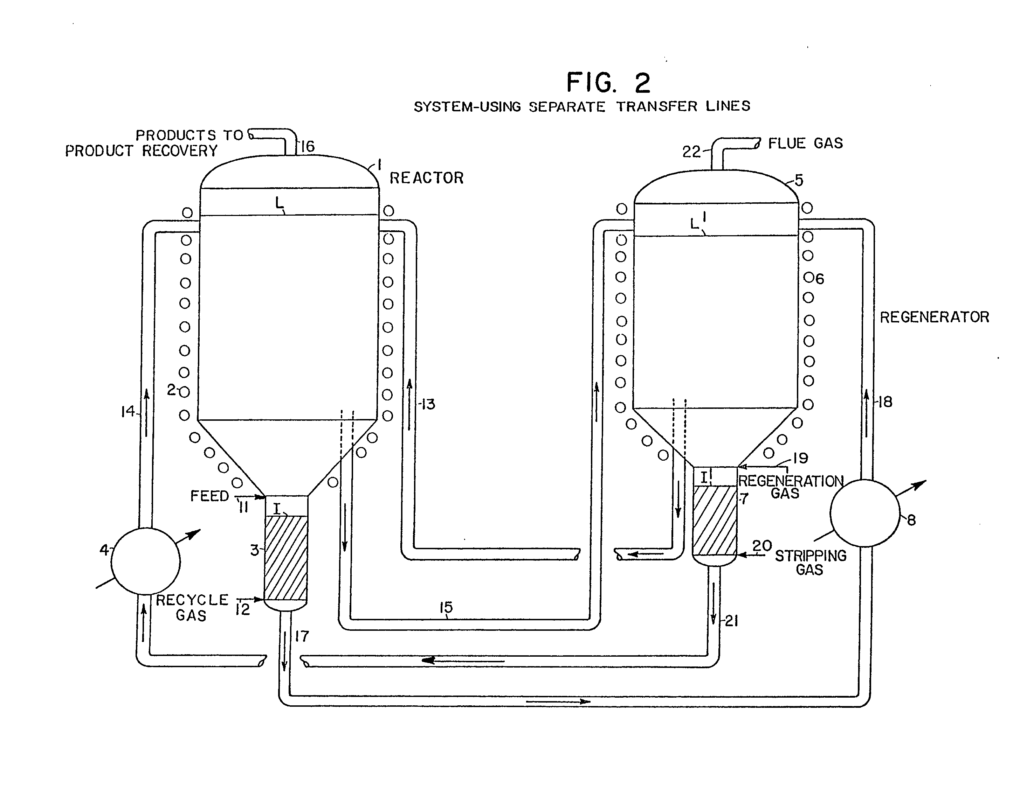

$Y$ = height above heat carrier-catalyst interface (e.g. I of Figure 2), ft.

Typical concentration profiles calculated using this equation show large concentrations near the bottom of the bed. This is due to the first term in the equation. At large values of bed height concentration becomes constant and equals $W_t/V$.

The operating conditions to be employed in the practice of the present invention are well known and will, of course, vary with the particular conversion reaction desired. The following table summarizes typical reactor conditions effective in the present invention.

|                | Reaction Conditions | | | |
| Principal Conversion Desired | Temperature, $^{\circ}$F. | Pressure, p.s.i.g. | Feed Rate V/V/Hr. | Hydrogen Rate s.c.f./bbl. |
|---|---|---|---|---|
| Hydrofining | 500-800 | 50-2,000 | 0..1-10.0 | 500-10,000 |
| Hydrocracking | 450-850 | 200-2,000 | 0.1-10.0 | 500,10,000 |
| Catalytic Cracking | 700-1,000 | 0-50 | 0.1-20.0 | 0 |
| Catalytic Reforming | 850-1,000 | 50-1,000 | 0.1-20.0 | 500-10,000 |

The feedstocks suitable for conversion in accordance with the invention include any of the well-known feeds conventionally employed in hydrocarbon conversion processes. Usually, they will be petroleum derived, although other sources such as shale oil and coal are not to be excluded. Typical of such feeds are heavy and light virgin gas oils, heavy and light virgin naphthas, solvent extracted gas oils, coker gas oils, steam-cracked gas oils, middle distillates, steam-cracked naphthas, coker naphthas, cycle oils, deasphalted residua, etc.

The heat carrier particles and the catalyst particles which are separated in the reactor and regenerator separation zones, or in a separate separation zone, are independently circulated through the system. In order to compensate for heat effects in the reactor and the regenerator, the heat carrier particles are recycled at a rate to keep the system heat balance. Heat exchangers are employed to add or withdraw heat to or from the heat carrier particles circulated between the reactor and regenerator.

The application of a magnetic field to the reactor, or the reactor and the catalyst regenerator in accordance with the invention is not to be limited to any specific method of producing the magnetic field. Conventional permanent magnets and/or electromagnets can be employed to provide the magnetic field used in the practice of this invention. The positioning of the magnets will, of course, vary with the solids used, degree of fluidization required and the effects desired. In the preferred embodiment of this invention, a toroidally shaped electromagnet is employed to surround at least a portion of the fluidized bed of the reactor, or the reactor and the catalyst regenerator, as this provides those skilled in the art with an excellent method of achieving near uniform magnetic force and stability throughout a bed. Such electromagnets when powered by direct current with the use of a rheostat are particularly desirable for applying a magnetic field to the bed particles and to provide an excellent method of stabilizing the fluidization of the bed particles in response to changing flow rates of the fluidizing medium.

The invention is not limited by the shape or positioning of the magnet employed to produce the magnetic field. The magnet can be of any size, strength or shape and can be placed above or below the bed to achieve special effect. The magnets employed in this invention can be placed within or without the vessel and may even be employed as an integral portion of the vessel structure itself. The process is not limited to any particular vessel material and it can be readily adopted for use in reactors currently employed by industry.

The degree of magnetic field to be applied to the fluidized solids in the reaction zone will, of course, depend on the desired magnetization for the ferromagnetic particles and the amount of stabilization desired. Particulate solids having weak ferromagnetic properties, e.g. cobalt, nickel, etc. will require the application of a stronger magnetic field than particulate solids having strong ferromagnetic properties, e.g., iron, to achieve similar stabilization effects. The size and shape of the solids will obviously have an effect on the strength of the magnetic field to be employed. However, since the strength of the field produced by an electromagnet can be finely adjusted by adjusting the field strength of the electromagnet, an operator can readily adjust the field strength employed to achieve the desired degree of stabilization for the particular system employed. Specific methods of applying the magnetic field are also described in U.S. Patents 3,440,731 and 3,439,899 and Belgian Patent 834,384.

Reference is now made to the drawings in which: Figure 1 shows two graphs of the settling velocity on the ordinate versus concentration (wt %) of heat carrier particles. The settling velocity is given in ft/sec or cms x 30.48/sec. In the top graph, particles of 25/45 mesh 2.2 g/cm³ beads in HF-85 Alumina are fluidized in a gas velocity of 0.75 ft/sec (23.2 cm/sec). In the lower graph, the same particles, but of 40/45 mesh, are fluidized in two series of runs at a gas velocity of 0.40 ft/sec (12.2 cm/cm). Figs. 2 illustrating specific embodiments of the first embodiment invention.

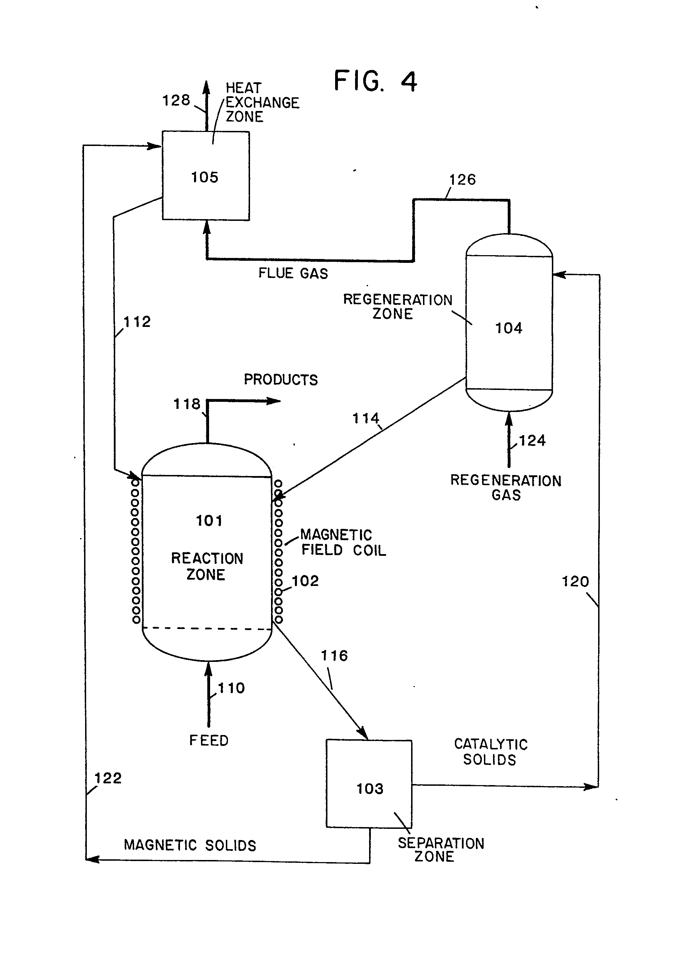

Figure 4 is a diagramatic flow plan illustrating a second embodiment of the invention.

PREFERRED EMBODIMENTS OF THE INVENTION

Referring to Figure 2, a naphtha feed boiling in the range of $200^{\circ}$-$375^{\circ}$F., hydrogen recycle gas, ferromagnetic catalyst particles and ferromagnetic substantially inert heat carrier particles are introducing into reforming reactor 1 via lines 11, 12, 13, and 14, respectively. Reactor 1 is surrounded by electromagnetic coil 2 which is powered by a direct current source (not shown). Electromagnetic coil 2 is arranged to apply a substantially uniform field on the particle solids charge in reactor 1. In this particular example, electromagnetic coil 2 provides a uniform magnetic field of 500 Oersteds.

The ferromagnetic heat carrier particles are stainless steel (400 series) particles having a particle size in the range of 400-800 microns. The ferromagnetic catalyst which is introduced into reactor 1 via line 13 is a commercially available reforming catalyst which has been combined with 6 wt.% of stainless steel (400 series) by encapsulation of the stainless steel with the alumina base. The reforming catalyst contains 10 wt.% $MoO_3$ on an alumina base (wt.% excludes weight of ferromagnetic material).

Settling zone 3 is connected to reactor 1 for separation of the heat carrier and catalyst particles. Recycle gas furnished through line 12 is introduced into reactor 1 via settling zone 3.

The heat carrier particles are coarse and have a higher density than the catalyst particles. Depending upon the heat carrier circulation rate and settling velocity, a concentration gradient is established from the top level (designated L) of reactor 1 to the interface (designated I) in settling zone 3. Thus, the concentration of the heat carrier solids is virtually 0 at L and

virtually 100% at I. The heat carrier particles which settle out in settling zone 3 are withdrawn therefrom by means of line 17 which delivers the heat carrier particles to heat exchange zone 8 for removal of heat as desired from the system prior to transfer to regenerator 5 by means of line 18. The spent ferromagnetic reforming catalyst is removed from reactor 1 via line 15 for delivery to regenerator 5. The upgraded naphtha product from reactor 1 is withdrawn from line 16. The lines for transferring the various streams are equipped with valves (not shown) to regulate the flow to a desirable level.

The spent catalyst from reactor 1 is regenerated in regenerator 5 by contacting the spent catalyst with air introduced via line 19 at a temperature of about 1125°F. Regenerator 5 is connected to settling zone 7 for removal of the heat carrier particles as in the aforedescribed reactor-settling zone system. Stripping gas is introduced into settler 7 via line 20. Regenerator 5 is surrounded by electromagnetic coil 6 which is arranged to apply a substantially uniform field on the particulate solid charge therein. The electromagnetic field to be applied to regenerator 5 is 500 Oersteds. The physical operation in the regenerator-settling zone system parallels that of the reactor-settling zone system with the concentration gradient for the heat carrier particles varying from virtually 0 at L' to virtually 100% at I'. The heat carrier particles which separate from settling zone 7 are delivered via line 21 to heat exchange zone 4 wherein heat may be added and the particles thereafter transferred by means of line 14 to reactor 1. The regenerated catalyst particles are removed from regenerator 5 by means of line 13 for delivery to reactor 1. The flue gas from regenerator 5 exists via line 22.

The operating conditions and yields for the aforedescribed process scheme are shown in Table 1 below.

Various modifications may be made to the process flow plan depicted in Figure 2. For example, admixtures of heat carrier and catalyst particles could be circulated between reactor 1 and regenerator 5 by joining line 15 with line 17 prior to heat exchanger 8 and by joining line 13 with line 21 prior to heat exchanger 4.

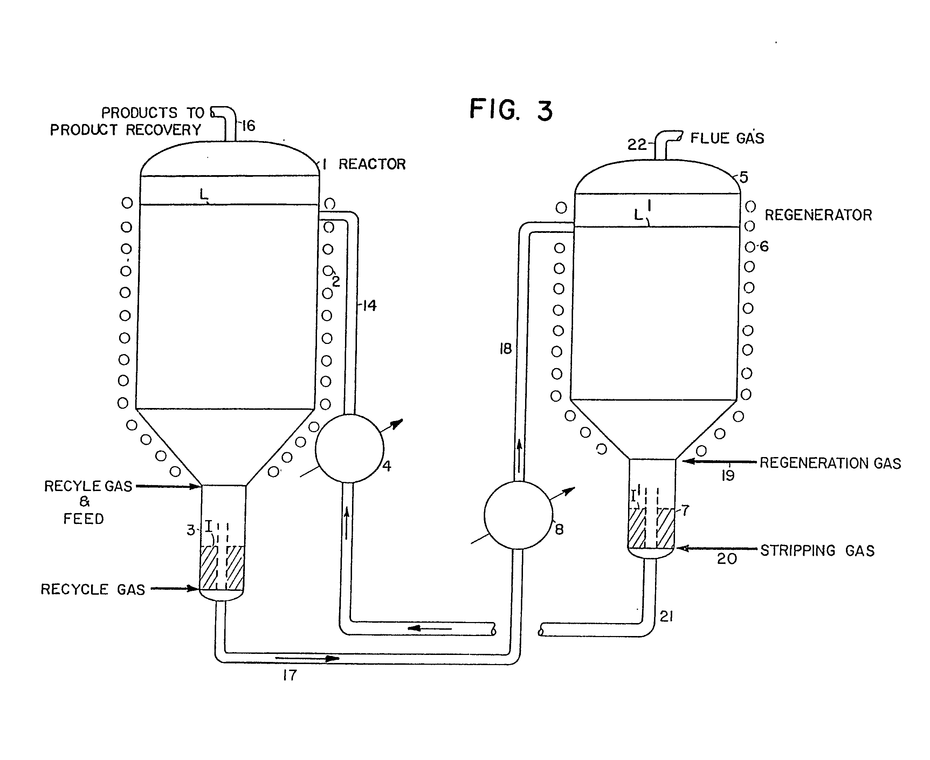

A further modification of the process flow plan of Figure 2 is shown in Figure 3 wherein the ratio of heat carrier and catalyst circulated together in the transfer lines connecting reactor 1 and regenerator 5 is controlled by withdrawing the admixture above the heat carrier interfaces I and I'. As shown in Figure 3, transfer lines 17 and 21 extend into settling zones 3 and 7, respecticely. Since the concentration of heat carrier solids is virtually O at L and L' and virtually 100% at I and I', the position above interfaces I and I' is adjusted so that the proper ratio of heat carrier and catalyst required for heat balance is obtained.

## TABLE I

### CATALYTIC REFORMING CONDITIONS

Feed: $200°-375°F$. Naphtha

Reactor Conditions

| | |
|---|---|
| Temperature, $°F$. | 900 |
| Pressure, psig | 200 |
| Feed Rate, W/Hr./W | 0.45 |
| Reactor Catalyst Holding Time, Hrs. | 2.0 |
| Reactor Velocity Above Feed Inlet, ft./sec. | 0.30-0.60 |
| Reactor Stripper Velocity, ft./sec. | 0.88 |
| Catalyst Oil Ratio | 1.0 |
| Heat Carrier/Catalyst Ratio | 2.0-4.0 |
| Recycle Gas, SCF/B | 4500 |
| $H_2$/Oil Ratio | 3.0 |

Ractor Yields

| | |
|---|---|
| Res. ON | 85-95 |
| Vol.% $C_5+$ | 80.4 |
| Vol.% $C_4+$ | 4.1 |
| Wt.% $C_3-$ | 0.3 |
| Wt.% Carbon | 0.8 |

Particulate Solids

| | |
|---|---|
| Heat Carrier Density, lb./ft.$^3$ | 195 |
| Heat Carrier Particle, Microns | 400-800 |
| Heat Carrier, Wt.% Ferromagnetic | 50 |
| Catalyst Density, lb./ft.$^3$ | 69-78 |
| Catalyst Particle Size, microns | 70-250 |
| Catalyst Wt.% Ferromagnetic | 6 |

Regenerator Conditions

| | |
|---|---|
| Temperature, $°F$. | 1125 |
| Pressure, psig | 200 |
| Regenerator Velocity, ft./sec. | 0.35-0.60 |

Referring to Figure 4, a light Arabian gas oil feed, ferromagnetic non-catalytic particles, and nonmagnetic catalytic particles are introduced into the reaction zone of cat cracker reactor 101 via lines 110, 112, and 114, respectively. Reactor 101 is surrounded by electromagnetic coil 102 which is powered by a direct current source (now shown). Electromagnetic coil 102 is arranged to apply a substantially uniform field on the total particulate solids charge in reactor 101. In this particular example, electromagnetic coil 102 gives a uniform magnetic field of 350 Oersteds.

The ferromagnetic, non-catalytic particles employed in reactor 101 are stainless steel particles consisting of stainless steel (400 series). The catalyst which is introduced into reactor 101 via line 114 is a conventional cracking catalyst which is a rare earth exchanged y-type zeolite containing about 4.0 wt.% $Re_2O_3$ and sold under the trade name CBZ-1.

The hydrocarbon conversion products from reactor 101 are withdrawn via line 118 and later condensed and distilled for separation into various products. The spent catalytic particles and the ferromagnetic particles are withdrawn from reactor 101 via line 116 and sent to separation zone 103 where the catalyst and ferromagnetic particles are separated by elutriation using steam to carry the light catalyst particles overhead and to permit the heavier stainless steel heat carrier particles to settle out. The separated catalytic particles are withdrawn from separation zone 103 via line 120 and introduced into the regeneration zone of regenerator 104 wherein the spent catalyst is conventionally regenerated by burning the coke deposited thereon in the presence of air which is introduced into regenerator 104 by means of line 124. Flue gas and regenerated catalyst from regenerator 104 exit via lines 126 and 114, respectively. The ferromagnetic solids from separation zone 103 are withdrawn by line 122 for introduction into heat exchange zone 105 wherein the ferromagnetic particles are in heat exchange contact with the hot flue gas (about $800°-1400°F.$) introduced into heat exchange zone 105 by line 126. The flue gas exits from heat exchange zone 105 via line 128. The ferromagnetic particles which have been heated by contact with the hot flue gas are removed from heat exchange zone 105 via line 114 for delivery to reactor 101.

The operating conditions and yields for the aforedescribed process scheme are shown in Table II below.

<div align="center">Table II</div>

Conditions and Yields for Catalytic Cracking Operation

Reactor Conditions

| | |
|---|---|
| Temperature | $950^{\circ}F.$ |
| Pressure | 35 psig |
| Feed Rate, W/H/W | 40 |
| Catalyst/Oil, Weight Ratio | 4.3 |
| Vol.% Ferromagnetic Particles | 20 |
| Vol.% Catalyst Particles | 80 |
| Catalyst Particle Size | 50-100 Microns |
| Ferromagnetic Particle Size | 20-30 Microns |
| Velocity | 2 Ft./Sec. |
| Applied Field | 360 Oersteds |
| Ferromagnetic Particles/Oil, Weight Ratio | 7.0 |

Regenerator Conditions

| | |
|---|---|
| Temperature | $1205^{\circ}F.$ |
| Pressure | 35 psig |
| Air Rate | 140 Kilo SCFM |

Reactor Yields

| | |
|---|---|
| $H_2S$, Wt. % | 1.2 |
| $C_1/C_2$, Wt.% | 2.6 |
| $C_3$, Vol. % | 7.4 |
| $C_4$, Vol. % | 13.1 |
| $C_5/430$, Vol. % | 55.4 |
| 430/650, Vol. % | 22.1 |
| $750^{+}$, Vol. % | 9.8 |
| Coke, Wt. % | 4.7 |

Example

Another operation that can be carried out in the system of the present invention is catalytic reforming using process steps similar to those described above with reference to Figure 4, but with different specific process conditons.  Conditions for processing a 160/350°F. light Arabian naphtha with a reforming catalyst containing 0.3 wt.% Pt and 0.3 wt.% Re on an alumina base are given below in Table III.

<div align="center">TABLE III</div>

<div align="center">REFORMING CONDITIONS AND YIELDS</div>

| | |
|---|---|
| Severity | $100^{+}$ RON Clear |
| Recycle Gas Rate | 4000 SCF/B |
| Reactor Conditions | |
|     Temperature, °F. | 915-962 |
|     Pressure, psig | 210 |
| Solids Circulation: Kilo lb./hr. | |
|     Catalyst Particles | 8.62 |
|     Ferromagnetic Particles | 6.38 |
| Velocity, Ft./Sec. | 1.3-1.7 |
| Particle Size, Microns | |
|     Catalyst Particles | 50-100 |
|     Ferromagnetic Particles | 20-50 |
|     Applied Field, Oersteds | 500 |
| Reactor Yields | |
|     $H_2$ | 2.7 Wt.% |
|     $C_1$ | 1.4 Wt.% |
|     $C_2$ | 2.7 Wt.% |
|     $C_3$ | 3.3 Wt.% |
|     $iC_4$ | 1.8 Wt.% |
|     $nC_4$ | 2.7 Wt.% |
|     $C_5+$ | 85.4 Wt.% |

0061548

In this patent specification, the following conversions of units apply:

Temperatures expressed in °F are converted to °C by subtracting 32 and then dividing by 1.8

Velocities expressed in feet/second (ft/sec or fps) are converted to cms/sec by multiplying by 30.48.

Areas expressed in square feet (sq-ft) are converted to $cm^2$ by multiplying by 929.

Volumes expressed in cubic feet ($ft^3$ or cu.ft.) and standard cubic (SCF) are converted to litres by multiplying by 28.32.

Volumes expressed in barrels (Bbl or B) are converted to litres by multiplying by 28.32.

Masses expressed in pounds (lbs) are converted to grams by multiplying by 453.6.

Pressures in pounds per square inch gauge are converted to equivalent gauge pressures in $kg/cm^2$ by multiplying by 0.07031.

The term "Kilo-SCFM" means "thousands of standard cubic feet per minute.

The mesh sizes of reference in Figure 1 are U.S. Sieve Series. 25 mesh corresponds to particles of 707 microns and 45 mesh corresponds to 354 microns size.

HF-85 Alumina is an alumina-containing material employed as a fluidized hydroforming catalyst base, and prepared by Nalco.

Claims

1. A process employing a bed of fluidized magnetizable particles within an applied magnetic field, characterized in that the process is a hydrocarbon conversion process which comprises the steps of:

   (a) contacting a hydrocarbon feedstock at hydrocarbon conversion conditions in a conversion zone having a magnetic field applied thereto (2, Fig. 2; 102, Fig 4) with a fluidized particulate solids mixture made up of a plurality of discrete substantially non-catalytic heat carrier particles and a plurality of discrete catalyst particles and whereof the heat carrier particles or the catalyst particles or both are magnetizable;

   (b) at least partially separating (3, Fig. 2; 103, Fig. 4) heat carrier particles from catalyst particles;

   (c) circulating catalyst particles (15, Fig. 2; 120, Fig 4) and any associated heat carrier particles which have not been separated therefrom in step (b) to a regeneration zone;

   (d) contacting the particles with oxygen (19) in the regeneration zone at elevated temperatures to burn coke therefrom; and

   (e) circulating particles (13) from the regeneration zone to the conversion zone.

2. A process as in claim 1 in which the catalyst particles and heat carrier particles have different settling rates in a fluidized bed, and the said at least partial separation of step (b) is performed by effecting selective settling of the heat carrier particles and catalyst particles.

3.  A process as in claim 2 in which the said at least partial separation of step (b) is effected on the fluidized solids mixture either in the conversion zone or in a settling zone (3, Fig. 2) or a separation zone (103, Fig. 4) communicating with the conversion zone.

4.  A process as in claim 3 in which the particles circulated to the regeneration zone in step (c) are transferred (17, Fig. 3) from a selected region (in 3, Fig. 3) of the conversion zone wherein the catalyst particles are associated with a substantially desired amount of inert particles.

5.  A process as in claim 3 or claim 4 in which the particles circulated to the regenerator in step (c) comprise a first stream (15, Fig. 2) which is transferred from a region of the conversion zone which is rich in catalyst particles, and in which there is also transferred to the regenerator, independently of the first stream, a second stream (17, Fig. 2) from a settling zone (3) communicating with the conversion zone, the second stream being rich in heat carrier particles.

6.  A process as in claim 4 or claim 5 in which in step (e), particles circulate (13, Fig. 2) from a selected region of the regeneration zone wherein the catalyst particles are associated with a substantially desired amount of heat carrier particles.

7. A process as in any one of claims 4 to 6 in which the particles circulated to the conversion zone in step (e) comprise a third stream (13, Fig. 2) which is transferred from a region of the regeneration zone which is rich in catalyst particles, and in which there is additionally circulated to the conversion zone a fourth stream (21), which is transferred independently of the third stream (13), from a region (7) communicating with the regeneration zone which is rich in heat carrier particles.

8. A process as in any one of claims 1 to 3 in which heat carrier particles which are at least partially separated (103, Fig. 4) in step (b) circulate to a heat exchange zone (105, Fig. 4) for heat recovery from hot flue gas (126) produced in the regeneration zone (104), and wherein the heated heat carrier particles thereafter return (112) to the conversion zone (101).

9. A process as in any one of claims 1 to 8 in which a magnetic field (6, Fig. 2) is imposed on the regeneration zone when magnetizable particles are intentionally circulated thereto.

10. A process as in any one of claims 1 to 9 in which at least some of the particles circulating to the conversion zone pass through a heat exchange zone (4, Fig. 2) and/or at least some of the particles circulating to the regeneration zone pass through a heat exchange zone (8).

11. An apparatus suitable for use in the process of any one of claims
1 to 10 characterized by comprising:

   (a)   a vessel for containing a bed of fluidized solids;

   (b)   means (2) for applying a magnetic field to the bed;

   (c)   a bed disposed within the vessel and containing a particulate
solids mixture of (i) magnetizable substantially non-catalytic
particles, and (ii) non-magnetizable catalyst particles;

   (d)   means operable for fluidizing the bed; and

   (e)   means operable for at least partially separating and magnetizable
substantially non-catalytic particles from said non-magnetizable
catalytic particles.

12. The apparatus of claim 11 comprising means (8, Fig. 2; 105, Fig. 4)
for exchanging heat with said separated magnetizable substantially
non-catalytic particles.

0061548

# FIG. I

### SETTLING VELOCITY vs CONCENTRATION OF HEAT CARRIER PARTICLES

25/45 MESH 2.2 gm/cc BEADS IN HF-85 ALUMINI

0.75 FT/SEC GAS VELOCITY

40/45 MESH 2.2 gm/cc BEADS IN HF-85 ALUMINI

0.40 FT/SEC GAS VELOCITY

(TWO SERIES OF RUNS)

SETTLING VELOCITY - FT/SEC

HEAT CARRIER CONCENTRATION, WT%

FIG. 2
SYSTEM-USING SEPARATE TRANSFER LINES

FIG. 3

FIG. 4

**0061548**

Application number

# EUROPEAN SEARCH REPORT

EP 81 30 1396

European Patent Office

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | EP - A - 0 021 854 (EXXON)<br>* Claims 1,7 *<br><br>-- | 1 | B 01 J   8/42<br>          8/32//<br>C 10 G  35/14<br>          11/18<br>          49/16 |
| | FR - A - 2 287 268 (EXXON)<br>* Claims 1-6; page 9, lines 9-27 *<br>& GB - A - 1 525 754<br><br>-- | 1,11,<br>12 | |
| | FR - A - 2 387 078 (EXXON)<br>* Claims 1,8,11-15; page 17, lines 13-17 *<br>& GB - A - 1 597 617(09-09-1981)<br><br>-- | 1,9 | **TECHNICAL FIELDS SEARCHED (Int. Cl.³)**<br><br>B 01 J 8/42<br>          8/32 |
| | FR - A - 1 134 513  (ESSO)<br>* Figure, abstract *<br><br>-- | 1-7 | |
| | FR - A - 1 118 838 (STANDARD OIL)<br>* Figures 1,2; abstract *<br><br>-- | 1-7 | |
| | US - A - 2 844 522 (REX et al.)<br>* Figure 1; claims 1-8 *<br><br>-- | 1-7 | **CATEGORY OF CITED DOCUMENTS**<br><br>X: particularly relevant<br>A: technological background<br>O: non-written disclosure<br>P: intermediate document |
| | US - A - 2 455 915 (BORCHERDING)<br>* Figures 1,2; claims 1-10 *<br><br>---- | 1-8 | T: theory or principle underlying the invention<br>E: conflicting application<br>D: document cited in the application<br>L: citation for other reasons |
| | The present search report has been drawn up for all claims | | &: member of the same patent family, corresponding document |

| Place of search | Date of completion of the search | Examiner |
|---|---|---|
| The Hague | 30-11-1981 | MICHIELS |

EPO Form 1503.1   06.78